# EUROPÄISCHE PATENTSCHRIFT

(11) **EP 3 586 573 B1**
(45) Veröffentlichungstag und Bekanntmachung des Hinweises auf die Patenterteilung: **06.01.2021**
(21) Anmeldenummer: 18707900.9
(22) Anmeldetag: 26.02.2018
(51) Int. Cl.: H05B 47/105, H04N 5/225

(54) **VERFAHREN ZUR KALIBRIERUNG EINES DREH- UND SCHWENKBAREN BÜHNENTECHNISCHEN GERÄTS**
METHOD FOR CALIBRATING A ROTATABLE AND PIVOTABLE PIECE OF TECHNICAL STAGE EQUIPMENT
PROCÉDÉ D'ÉTALONNAGE D'UN APPAREIL SCÉNIQUE ROTATIF ET PIVOTANT

(30) Priorität: 27.02.2017 AT 501542017
(43) Veröffentlichungstag der Anmeldung: 01.01.2020
(73) Patentinhaber: zactrack GmbH, 1020 Wien (AT)
(72) Erfinder: PETRICEK, Werner, 3400 Kierling (AT)
(74) Vertreter: Puchberger & Partner Patentanwälte
(86) Internationale Anmeldenummer: PCT/EP2018/054664
(87) Internationale Veröffentlichungsnummer: WO 2018/154108

(56) Entgegenhaltungen:
- EP-A1- 1 385 335
- EP-A2- 0 814 344
- WO-A1-2007/100258
- JP-A- H0 462 703

## Beschreibung

Die Erfindung betrifft ein Verfahren zur Kalibrierung eines dreh- und schwenkbaren bühnentechnischen Geräts.

Die EP 0 814 344 A2 beschreibt eine Vorrichtung und ein Verfahren zur Nachführung einer Beleuchtungseinheit in Bezug auf einen bewegten Zielgegenstand. Die EP 1 385 335 A1 und die WO 2007/100258 A1 beschreiben Verfahren, die ortsfest angeordnete Projektoren betreffen.

Insbesondere für die Beleuchtung von Bühnen in der Theater- und Veranstaltungstechnik, aber auch für andere Anwendungen, sind bühnentechnische Geräte bekannt, die entlang zweier Achsen drehbar bzw. schwenkbar über einem , Untergrund angeordnet sind.

Bei diesen Geräten kann es sich insbesondere um Scheinwerfer oder um Kameras handeln. Entsprechende Scheinwerfer sind beispielsweise unter der Bezeichnung Moving Head bzw. kopfbewegte Scheinwerfer bekannt, während entsprechende Kameras unter der Bezeichnung Pan-Tilt-Kameras oder Pan-Tilt-Zoom Kameras bekannt sind.

Bei den beiden Achsen handelt es sich um eine parallel zum Untergrund verlaufende Schwenkachse, die in der Regel als Tilt-Achse bezeichnet wird, und eine normal auf den Untergrund verlaufende Drehachse, die in der Regel als Pan-Achse bezeichnet wird.

Derartige Geräte, insbesondere Scheinwerfer und Kameras, sind um die Pan-Achse üblicherweise um 540°, also eineinhalb Umdrehungen, drehbar, und um die Tilt-Achse in der Regel um 180° bis 240° schwenkbar.

Damit kann jeder Punkt auf dem abgedeckten Kugelausschnitt auf 2 Arten erreicht werden: entweder mit einem bestimmten Pan-Wert X und Tilt-Wert Y, oder mit einem Pan-Wert X+180° weggedreht und mit dem Tilt-Wert an der Vertikalachse gespiegelt (sogenannter Tilt Flip). Projiziert ein entsprechender Scheinwerfer beispielsweise ein Muster, würde es einmal normal, und im anderen Fall verkehrt herum auf der Bühne sichtbar sein.

Bei einem derartigen, fest oder beweglich an der Decke oder einem Bühnenaufbau montierten Gerät, beispielsweise Scheinwerfer oder Kamera, lässt sich somit durch Einstellung der Pan- und Tilt-Werte vorzugsweise jeder Punkt auf der Bühne erreichen. Ein Scheinwerfer erzeugt dabei auf dem Untergrund über einen gerichteten Lichtkegel einen beleuchteten, vorzugsweise ellipsenförmigen Bereich. Eine Kamera zeichnet einen gewissen Beobachtungsbereich der Bühne auf.

Um derart bewegliche Geräte zur computergestützten und vorzugsweise automatischen Beleuchtung oder Aufnahme der Darsteller auf der Bühne einzurichten, müssen die Geräte hinsichtlich ihrer Position und ihrer Ansteuerwerte kalibriert werden.

Insbesondere muss die Position der Geräte in absoluten Koordinaten bekannt sein. Außerdem muss bekannt sein, welche Ansteuerwerte des verwendeten Protokolls zur gewünschten Drehung des Geräts führen, wobei die Pan- und Tilt-Werte des Geräts auf das meist verwendete DMX-Protokoll abgebildet werden müssen. Bei der Kalibrierung ergeben sich jedoch in der Praxis mehrere Probleme.

Zunächst muss festgestellt werden, an welchem Punkt im dreidimensionalen Raum sich das Gerät befindet (x-, y- und z-Koordinaten). Dies erfolgt in der Regel durch Vermessen des Bühnenraums und der Position der bühnentechnischen Geräte, sowie durch computergestützte Generierung eines dreidimensionalen Modells.

Dies ist aufwändig und fehleranfällig - meist gelingt es nicht, die exakte Position der Geräte korrekt zu vermessen. Außerdem besteht die Gefahr, dass sich die Position des Geräts zwischen dem Zeitpunkt des Vermessens und dem Zeitpunkt der Aufführung absichtlich oder unabsichtlich ändert.

Weiters muss der Zusammenhang zwischen den digitalen Pan-und Tilt-Werten, die zur Ansteuerung des Geräts benutzt werden, und den resultierenden Änderungen der absoluten Winkelkoordinaten auf der Bühne festgestellt werden. Mit anderen Worten, es muss festgestellt werden, welche Pan- und Tilt-Werte erforderlich sind, um eine bestimmte Winkeländerung des durch den Scheinwerfer beleuchteten oder durch die Kamera beobachteten Bereichs auf der Bühne zu erreichen.

Auch diese Abbildungsvorschrift wird in der Regel an Hand des computergenerierten 3D-Modells erzeugt, sodass die gleichen Ungenauigkeiten auftreten können.
Eine verlässliche Zuordnung des computergenerierten Modells zu den realen Verhältnissen im Bühnenraum ist nicht möglich. Schließlich erfordert eine eindeutige Lokalisierung der bühnentechnischen Geräte auch die Bestimmung der Rotation, also der Ausrichtung des bühnentechnischen Geräts. Auch dabei besteht die Problematik, dass das computergenerierte Modell in der Regel nicht den tatsächlichen Verhältnissen entspricht.

Diese und andere Probleme werden erfindungsgemäß durch ein Verfahren gemäß den kennzeichnenden Merkmalen des Anspruchs 1 gelöst. Erfindungsgemäß kann insbesondere vorgesehen sein, dass ein Element auf dem Untergrund angeordnet wird, welches geeignet ist, mit dem bühnentechnischen Gerät in einem bestimmten Bereich der Pan- und Tilt-Werte zusammenzuwirken, das bühnentechnische Gerät durch Eingabe von Tilt- und Pan-Werten gedreht und geschwenkt wird, bis ein Pan- und Tilt-Wert erreicht wird, bei dem das Element mit dem bühnentechnischen Gerät zusammenwirkt, und durch wiederholte Drehung und/oder Schwenkung des bühnentechnischen Geräts und Detektion der Zusammenwirkung des bühnentechnischen Geräts mit dem Element eine Abbildungsvorschrift der Pan- Werte und/oder der Tilt-Werte auf die Winkelkoordinaten des bühnentechnischen Geräts bestimmt wird.

Der Begriff des Zusammenwirkens kann erfindungsgemäß verschiedenste physikalische Wechselwirkungen zwischen dem, über dem Untergrund angeordneten bühnentechnischen Gerät und dem, am Untergrund angeordneten Element umfassen. Insbesondere kann eine optische Zusammenwirkung vorgesehen sein. Es kann aber auch eine Zusammenwirkung auf Grundlage von gerichteten Schallwellen, beispielsweise Ultraschallpulsen, oder gerichteten Funkwellen, beispielsweise Radar, vorgesehen sein. Die Art der Zusammenwirkung ist für die Ausführung des erfindungsgemäßen Verfahrens nicht von grundsätzlicher Bedeutung.

Bei dem bühnentechnischen Gerät kann es sich erfindungsgemäß insbesondere um eine Kamera oder um einen Scheinwerfer handeln. Sowohl die Kamera, als auch der Scheinwerfer können zur Aussendung bzw. Detektion von optischen Signalen in einem beliebigen Wellenlängenbereich ausgeführt sein.

Im Fall eines Scheinwerfers kann das zusammenwirkende Element erfindungsgemäß als Lichtsensor ausgeführt sein, der dazu ausgeführt ist, den beleuchteten Bereich auf der Bühne zu detektieren.
Der Scheinwerfer kann in einem beliebigen Wellenlängenbereich arbeiten, wobei der Lichtsensor dazu ausgeführt ist, die vom Scheinwerfer gesendeten Signale zu detektieren. Insbesondere kann ein Wellenlängenbereich von 380nm bis 780nm (sichtbares Licht) oder darüber (Infrarot) vorgesehen sein.

Im Fall einer Kamera kann das zusammenwirkende Element erfindungsgemäß als Lichtquelle oder andere optische Markierung ausgeführt sein. In diesem Fall ist die Kamera dazu ausgeführt, es zu detektieren, wenn die Lichtquelle oder die optische Markierung im Beobachtungsbereich der Kamera ist.

Erfindungsgemäß kann vorgesehen sein, dass das bühnentechnische Gerät als Scheinwerfer ausgeführt ist und auf einem Untergrund einen beleuchteten Bereich erzeugt, und das Element als Lichtsensor ausgeführt ist, wobei der Lichtsensor auf dem Untergrund angeordnet wird, der beleuchtete Bereich durch Drehung und Schwenkung des Scheinwerfers über den Untergrund bewegt wird, der Lichtsensor die Ränder des beleuchteten Bereichs detektiert, und durch Drehung und/oder Schwenkung des Scheinwerfers und wiederholtes Detektieren des beleuchteten Bereichs eine Abbildungsvorschrift der Pan- Werte und/oder der Tilt-Werte des Scheinwerfers auf die Winkelkoordinaten des Scheinwerfers bestimmt wird.

Bei dem Lichtsensor kann es sich insbesondere um ein Smartphone handeln, wobei das erfindungsgemäße Verfahren vorzugsweise von einer Smartphone-App oder einem Computerprogramm auf einem Server ausgeführt oder gesteuert werden kann.

Erfindungsgemäß kann insbesondere vorgesehen sein, dass zunächst ein Lichtsensor auf einem Untergrund angeordnet wird. Danach wird der beleuchtete Bereich durch Bewegung des Scheinwerfers über den Untergrund bewegt. Danach detektiert der Lichtsensor die Ränder des beleuchteten Bereichs. Aus den detektierten Rändern wird ein Mittelpunkt des beleuchteten Bereichs in Tilt- und Pan-Richtung bestimmt. Danach wird der Scheinwerfer weitergedreht und der Mittelpunkt wird neuerlich bestimmt. Aus den verwendeten Pan- und/oder Tilt-Werten wird eine Abbildungsvorschrift bestimmt.

Erfindungsgemäß kann vorgesehen sein, dass der beleuchtete Bereich durch Drehung und Schwenkung des Scheinwerfers so lange über den Untergrund bewegt wird, bis der Lichtsensor einen Rand des beleuchteten Bereichs detektiert, und in Folge die Abmessungen sowie ein Mittelpunkt des beleuchteten Bereichs durch Variieren des Pan-Wertes und/oder des Tilt-Wertes des Scheinwerfers bestimmt werden.

Erfindungsgemäß kann insbesondere vorgesehen sein, dass zur Bestimmung der Abbildungsvorschrift nach der Detektion des beleuchteten Bereichs eine vollständige 360°-Drehung des Scheinwerfers um die Pan-Achse durchgeführt wird. Aus den verwendeten Pan-Werten bei der ersten und zweiten Detektierung des beleuchteten Bereichs kann die Abbildungsvorschrift berechnet werden.

In speziellen Situationen kann es jedoch sein, dass der Scheinwerfer nicht in der Lage ist, nach der Detektion des beleuchteten Bereichs eine vollständige 360°-Drehung durchzuführen. Die meisten Moving Head Scheinwerfer erlauben einen Pan-Bereich von bis zu 540°. Wenn bei der ersten Detektion des beleuchteten Bereichs ein Pan-Winkel von unter 180° angefahren wird, ist eine vollständige Drehung um weitere 360° möglich, sodass aus den beiden Pan-Werten die Abbildungsvorschrift berechnet werden kann. Dies ist jedoch nicht mehr möglich, wenn bei der ersten Detektion des beleuchteten Bereichs ein Pan-Winkel von über 180° angefahren wird.

Deshalb kann erfindungsgemäß vorgesehen sein, dass zur Bestimmung der Abbildungsvorschrift nach der Detektion des beleuchteten Bereichs eine 180°-Drehung des Scheinwerfers um die Pan-Achse sowie eine Schwenkung des Scheinwerfers derart durchgeführt wird, dass der Tilt-Wert des Scheinwerfers relativ zur Pan-Achse gespiegelt wird (sogenannter Tilt-Flip).

Dies hat den Vorteil, dass für einen Scheinwerfer mit einem Pan-Winkelbereich von 0° bis 540° (eineinhalb Umdrehungen) jeder Punkt auf der Bühne durch Erhöhung des Pan-Werts um 180° und nachfolgendem Tilt-Flip erreichbar ist: Der erste Pan-Wert wird im Bereich von bis zu 360° festgelegt. Danach wird der Pan-Wert um 180° erhöht und der Tilt-Wert um die vertikale Achse des Scheinwerfers, also die Pan-Achse, gespiegelt, sodass sich der Scheinwerfer auf die gegenüberliegende Seite schwenkt. Aus den beiden Pan-Werten bei der Detektierung des beleuchteten Bereichs kann wiederum die Abbildungsvorschrift berechnet werden.

Erfindungsgemäß kann vorgesehen sein, dass die Abmessungen des beleuchteten Bereichs detektiert werden und aus der berechneten Abbildungsvorschrift der Öffnungswinkel des vom Scheinwerfer erzeugten Lichtkegels bestimmt wird. Dabei kann insbesondere vorausgesetzt werden, dass der Lichtkegel symmetrisch ist, sodass der Öffnungswinkel in der Pan-Achse und in der Tilt-Achse identisch ist.

Erfindungsgemäß kann vorgesehen sein, dass zunächst durch Abmessung des beleuchteten Bereichs entlang der durch die Pan-Werte aufgespannten Ebene eine Abbildungsvorschrift der Pan-Werte auf absolute Winkelkoordinaten und der Öffnungswinkel des Lichtkegels entlang dieser Ebene bestimmt wird, und in Folge durch Abmessung des beleuchteten Bereichs entlang der durch die Tilt-Werte aufgespannten Ebene eine Abbildungsvorschrift der Tilt-Werte auf absolute Winkelkoordinaten bestimmt wird.

Erfindungsgemäß kann vorgesehen sein, dass das bühnentechnische Gerät als Kamera ausgeführt ist, die einen Beobachtungsbereich auf einem Untergrund aufzeichnet, und das zusammenwirkende Element als Lichtquelle, optische Markierung oder dergleichen ausgeführt ist, wobei das Element auf dem Untergrund angeordnet wird, der Beobachtungsbereich durch Drehung und Schwenkung der Kamera über den Untergrund bewegt wird, der Beobachtungsbereich oder die Ränder des Beobachtungsbereichs durch Detektion des Elements erkannt werden, und durch Drehung und/oder Schwenkung der Kamera und wiederholtes Detektieren des Beobachtungsbereichs eine Abbildungsvorschrift der Pan- Werte und/oder der Tilt-Werte der Kamera auf die Winkelkoordinaten der Kamera bestimmt wird.

Die Lichtquelle oder die optische Markierung kann insbesondere punktförmig ausgeführt sein, beispielsweise in Form einer Leuchtdiode.
Das zusammenwirkende Element kann auch als optische Markierung am Untergrund ausgeführt sein, beispielsweise in Form eines Fadenkreuzes. In diesem Fall ist die Kamera dazu ausgeführt, es zu detektieren, wenn das Fadenkreuz im Beobachtungsbereich der Kamera oder in einem bestimmten Bereich innerhalb des Beobachtungsbereichs der Kamera ist. Statt eines Fadenkreuzes können auch mehrere Punktmarkierungen am Untergrund angeordnet werden, die von der Kamera detektiert werden können.
Zur sicheren Detektion durch die Kamera kann insbesondere vorgesehen sein, die Markierung in bestimmten, besonders kontrastreichen Farben am Untergrund anzuordnen, beispielsweise in weißer oder gelber Farbe auf schwarzem Untergrund oder umgekehrt. Auch hier kann vorgesehen sein, die Markierung in einem Wellenlängenbereich von 380nm bis 780nm (sichtbares Licht) oder darüber (Infrarot) auszuführen, sofern die Kamera dazu eingerichtet ist, die Markierung in diesem Wellenlängenbereich zu detektieren.

Erfindungsgemäß kann vorgesehen sein, dass der Beobachtungsbereich der Kamera durch Drehung und Schwenkung der Kamera so lange über den Untergrund bewegt wird, bis das zusammenwirkende Element am Rand oder innerhalb des Beobachtungsbereichs detektiert wird, und in Folge die Abmessungen sowie ein Mittelpunkt des Beobachtungsbereichs durch Variieren des Pan-Wertes und/oder des Tilt-Wertes der Kamera bestimmt werden.

Erfindungsgemäß kann vorgesehen sein, dass zur Bestimmung der Abbildungsvorschrift nach der Detektion des Beobachtungsbereichs eine vollständige 360°-Drehung der Kamera um die Pan-Achse durchgeführt wird.

Erfindungsgemäß kann vorgesehen sein, dass zur Bestimmung der Abbildungsvorschrift nach der Detektion des Beobachtungsbereichs eine 180°-Drehung der Kamera um die Pan-Achse sowie eine Schwenkung der Kamera derart durchgeführt wird, dass der Tilt-Wert der Kamera relativ zur Pan-Achse gespiegelt wird.

Erfindungsgemäß kann vorgesehen sein, dass die Abmessungen des Beobachtungsbereichs detektiert werden und aus der berechneten Abbildungsvorschrift der Öffnungswinkel des von der Kamera beobachteten Bereichs bestimmt wird.

Im Fall eines Bühnengeräts mit nicht symmetrischem Beobachtungsbereich, beispielsweise einer HD-Kamera mit einem rechteckigen Beobachtungsbereich von 1920 x 1080 Pixel, kann dies bei der Berechnung der Abbildungsvorschrift und auch bei der Berechnung des Öffnungswinkels in Betracht gezogen werden.

Erfindungsgemäß kann vorgesehen sein, dass zunächst durch Abmessung des Beobachtungsbereichs entlang der durch die Pan-Werte aufgespannten Ebene eine Abbildungsvorschrift der Pan-Werte auf absolute Winkelkoordinaten und der Öffnungswinkel des von der Kamera beobachteten Bereichs entlang dieser Ebene bestimmt wird, und in Folge durch Abmessung des Beobachtungsbereichs entlang der durch die Tilt-Werte aufgespannten Ebene eine Abbildungsvorschrift der Tilt-Werte auf absolute Winkelkoordinaten bestimmt wird.

Erfindungsgemäß kann vorgesehen sein, dass das Verfahren für mehrere, vorzugsweise drei, bekannte Positionen des zusammenwirkenden Elements durchgeführt wird. Zu diesem Zweck kann das Element hintereinander auf drei bekannte Positionen auf dem Untergrund angeordnet werden, und jeweils ein erfindungsgemäßes Verfahren ausgeführt werden. Alternativ können natürlich auch mehrere Elemente am Untergrund angeordnet werden, die hintereinander angefahren werden.

Erfindungsgemäß kann vorgesehen sein, dass aus den detektierten Pan- und Tilt-Werten für vorzugsweise drei bekannte Positionen des Elements die absolute Position und vorzugsweise auch die Ausrichtung des bühnentechnischen Geräts im dreidimensionalen Raum bestimmt wird.

Dabei bezeichnet die Ausrichtung des bühnentechnischen Geräts die Richtung des vom Scheinwerfer ausgestrahlten Lichtkegels bzw. des von der Kamera aufgenommenen Beobachtungsbereichs.

Die Erfindung erstreckt sich weiters auf ein computerlesbares Speichermedium umfassen ein Computerprogramm, beispielsweise eine Smartphone-App oder ein Programm auf einem Server, welches den Ablauf eines erfindungsgemäßen Verfahrens steuert. Das Computerprogramm kann insbesondere das bühnentechnische Gerät mit den erforderlichen Pan- und Tilt-Werten ansteuern, die Messwerte des Lichtsensors bzw. der Kamera entgegennehmen, und die Zielwerte des Verfahrens berechnen.

Weitere erfindungsgemäße Merkmale ergeben sich aus den Patentansprüchen, der Beschreibung der Ausführungsbeispiele und den Zeichnungen.

Die Erfindung wird im Folgenden an Hand eines nicht ausschließlichen Ausführungsbeispiels näher erläutert.

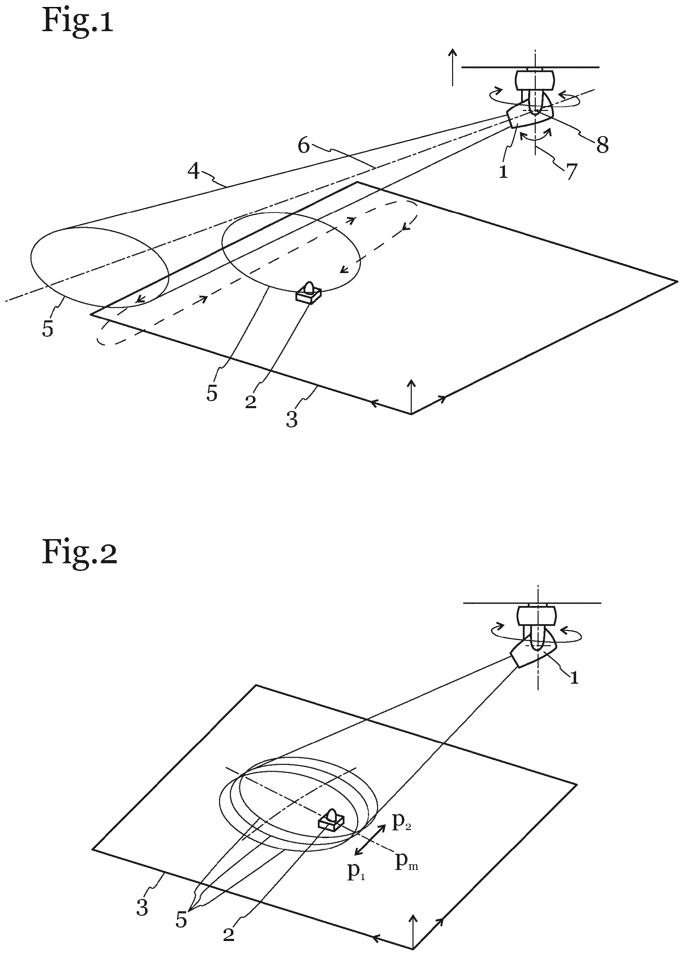

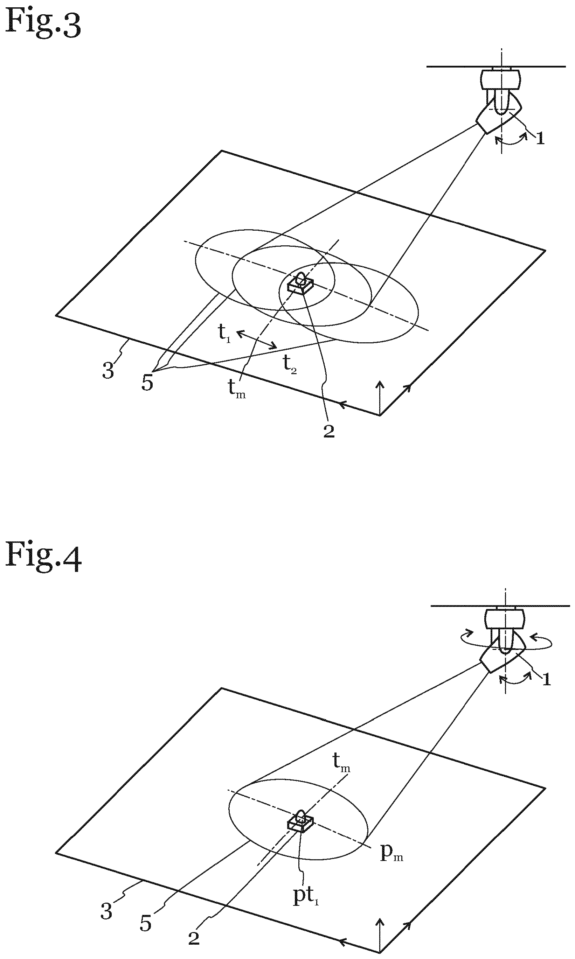

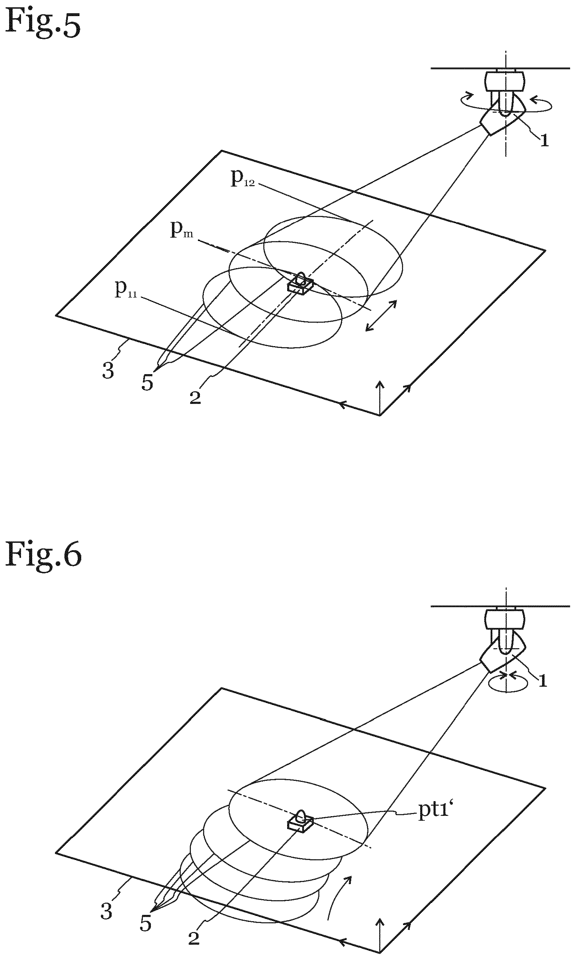

Figs. 1 bis 7 zeigen aufeinanderfolgende Verfahrensschritte einer Ausführungsform des erfindungsgemäßen Verfahrens an Hand eines Scheinwerfers und eines am Untergrund angeordneten Lichtsensors, der das einfallende Licht detektiert.

In einem nicht dargestellten Ausführungsbeispiel verläuft das erfindungsgemäße Verfahren in gleicher Weise für eine Kamera mit einer am Untergrund angeordneten Lichtquelle, wobei die Kamera zur Detektion der Lichtquelle ausgeführt ist.

Fig. 1 zeigt einen Untergrund 3, beispielsweise eine Theaterbühne, und einen über dem Untergrund montierten Scheinwerfer 1. Auf dem Untergrund 3 ist ein Lichtsensor 2 angeordnet. Bei dem Lichtsensor 2 handelt es sich insbesondere um einen drahtlos ansteuerbaren Lichtsensor 2, der mit einer externen Recheneinheit in Verbindung steht. Der Lichtsensor ist insbesondere nicht fest mit dem Untergrund 3 verbunden, sondern entfernbar auf dem Untergrund platziert. In einer Ausführungsform der Erfindung kann es sich bei dem Lichtsensor 2 um ein Smartphone handeln, das über eine drahtlose Verbindung, beispielsweise WLAN, mit einem Server in Verbindung steht.
Dabei wird das erfindungsgemäße Verfahren über eine App auf dem Smartphone oder über ein Computerprogramm auf einem Server gesteuert, und die App oder das Computerprogramm auf dem Server nimmt die vom Lichtsensor 2 ermittelten Messwerte entgegen.

Auf dem Lichtsensor 2 ist ein Schwellwert zur Detektion von eintreffendem Licht voreingestellt, sodass der Lichtsensor 2 das Überschreiten bzw. Unterschreiten dieses Schwellwerts feststellen kann. Auf eine bestimmte Lichtstärke kommt es bei der Detektion nicht an. Wesentlich ist nicht die Höhe des überschrittenen Schwellwertes, sondern dass im Rahmen des gesamten erfindungsgemäßen Verfahrens derselbe Lichtsensor 2 mit unverändertem Schwellwert eingesetzt wird.

Der Scheinwerfer 1 ist um zwei normal zueinander stehende Achsen schwenkbar. Entlang der schematisch angedeuteten Pan-Achse 7 ist der Scheinwerfer um etwa 540° drehbar. Entlang der schematisch angedeuteten Tilt-Achse 8 ist der Scheinwerfer um 180° schwenkbar. Der Scheinwerfer 1 emittiert einen Lichtkegel 4 mit einer Lichtkegelachse 6, der auf dem Untergrund 3 einen beleuchteten Bereich 5 erzeugt. Der auf dem Untergrund 3 erzeugte beleuchtete Bereich 5 ist in der Regel ellipsenförmig.

Durch Drehung in der Pan- und Tilt-Achse kann der Scheinwerfer 1 jeden Punkt auf dem Untergrund 3 beleuchten. Der mögliche Wertebereich der Pan- und Tilt-Werte ist in der betrachteten Ausführungsform 0 bis 2¹⁶ = 65536 Ticks. Vom Pan- Wert 0 bis zum Pan-Wert 65536 vollführt der Scheinwerfer also eine Drehung um die Pan-Achse von etwa 540°. Es kann davon ausgegangen werden, dass das Mapping der Pan-Werte auf den Winkelbereich linear ist, die exakte Abbildungsvorschrift der Pan-Werte auf den zurückgelegten Winkelbereich ist jedoch unbekannt. Gleiches gilt für die Tilt-Werte.

In einer Ausführungsform der Erfindung wird zunächst der Lichtsensor 2 auf dem Untergrund 3 platziert und danach der Lichtkegel 4 systematisch entlang einer vordefinierten Kurve über den Untergrund 3 bewegt, bis der Lichtsensor 2 den Rand des beleuchteten Bereichs 5 detektiert. Die Kurve, entlang der der Lichtkegel 4 bewegt wird, ist in Fig. 1 als strichlierte Linie schematisch angedeutet.
Sobald der Lichtsensor 2 einen Rand des beleuchteten Bereich 5 detektiert, stoppt die Bewegung des Scheinwerfers 1, und der Pan-Wert p1 sowie Tilt-Wert t1 dieser Position wird gespeichert.

Fig. 2 zeigt den nächsten Schritt einer Ausführungsform des erfindungsgemäßen Verfahrens. In diesem Schritt wird, ausgehend von dem zunächst detektierten Rand des beleuchteten Bereichs 5, der Scheinwerfer 1 bei unverändertem Tilt-Wert in der Pan-Achse 7 weiterbewegt, um das Ende des beleuchteten Bereichs 5, also ein Absinken der empfangenen Lichtstärke unter einen Schwellwert, zu detektieren. Sobald dies detektiert wird, stoppt die Bewegung des Scheinwerfers, und der Pan-Wert p2 wird gespeichert. Der Mittelpunkt in Pan-Richtung pm wird aus pm = (p1 + p2) / 2 bestimmt, und der Scheinwerfer bewegt sich in diese Position.

In einer beispielhaften Ausführungsform des Verfahrens werden als Ränder des beleuchteten Bereichs die Pan-Werte p1 = 30624 und p2 = 33184 detektiert, sodass der Mittelpunkt in Pan-Dimension pm als 31904 berechnet wird.

Fig. 3 zeigt den nächsten Schritt dieser Ausführungsform. In diesem Schritt wird der Scheinwerfer, bei feststehendem Pan-Wert pm, in der Tilt-Achse vor- und zurück bewegt, bis die beiden Ränder des beleuchteten Bereichs detektiert werden.

Die jeweiligen Tilt-Werte entlang des Pan-Werts pm werden als t1 und t2 gespeichert, und der Mittelwert tm aus tm = (t1 + t2) / 2 berechnet. Der Mittelpunkt des beleuchteten Bereichs 5 wird in Pan- und Tilt-Werten durch das Tupel der beiden berechneten Mittelwerte pt1 = (pm, tm) festgelegt.

In Fig. 4 wird der Scheinwerfer 1 mit den Werten des Tupels pt1 angesteuert, sodass sich der Mittelpunkt des beleuchteten Bereichs 5 genau an die Position des Lichtsensors 2 bewegt.

In Fig. 5 wird in einem nächsten Schritt des Verfahrens die Pan-Ausdehnung des beleuchteten Bereichs 5 in seinem Mittelpunkt bestimmt. Zu diesem Zweck wird der Scheinwerfer 1 bei festem Tilt-Wert tm in seiner Pan-Achse vor- und zurück bewegt, und die Ränder des beleuchteten Bereichs 5 werden detektiert. Dies liefert die äußeren begrenzenden Pan-Werte p11 und p12 des beleuchteten Bereichs 5.

In Fig. 6 vollführt der Scheinwerfer nun eine volle 360°-Umdrehung in der Pan-Achse, bis der beleuchtete Bereich wieder auf den Lichtsensor 2 trifft.

Für den Fall, dass die Pan-Drehung im Punkt pt1 bereits so groß ist, dass eine weitere 360°-Drehung um die Pan-Achse nicht mehr möglich ist, kann der Scheinwerfer eine 180° Drehung um die Pan-Achse und einen Tilt-Flip, also eine Spiegelung des Tilt-Wertes um die vertikale Achse des Scheinwerfers, vollführen. Dies bedeutet, dass bei einem Tilt-Wert t1 = Y der neue Tilt-Wert auf 65536-Y gesetzt wird.

Der derart berechnete Tilt-Wert ist jedoch nur dann korrekt, wenn sich die Tilt-Werte symmetrisch um die Mittelachse des Scheinwerfers verteilen. Ist dies nicht der Fall, kann der Tilt-Flip zu einem falschen Tilt-Wert führen. Deshalb ist in einer Ausführungsform der Erfindung vorgesehen, dass nach dem Tilt-Flip der neue Tilt-Wert nicht auf 65536-Y gesetzt wird, sondern bei festem Pan-Wert durch Vor- und Zurückschwenken des Scheinwerfers in der Tilt-Achse die Begrenzungen des beleuchteten Bereichs neu bestimmt werden, und der neue Tilt-Wert tm' aus diesen berechnet wird.

Es werden danach neuerlich durch Erhöhung des Pan-Wertes die äußeren begrenzenden Pan-Werte p21 und p22 gemessen, und der Mittelwert pm aus pm' = (p21 + p22) / 2 berechnet. Der Mittelpunkt des beleuchteten Bereichs 5 wird in Pan- und Tilt-Werten durch das Tupel pt1' = (pm', tm') festgelegt.

Beispielsweise werden beim neuerlichen Detektieren des beleuchteten Bereichs die Werte p21 = 52504 und p22 = 55064 ermittelt, sodass der Punkt pm' nun den Wert 53784 annimmt.

Somit ist bekannt, dass der Scheinwerfer zwischen dem ersten detektierten Pan-Wert 33184 und dem zweiten detektierten Pan-Wert 55064 eine Drehung um einen bestimmten Winkel vollführt hat, und zwar entweder 360° ohne Tilt-Flip oder 180° wenn ein Tilt-Flip erforderlich war.

Es kann nun aus der Differenz der Punkte pt1 und pt1' eine Abbildungsvorschrift der Pan-Werte auf die absoluten Winkelkoordinaten bestimmt werden. Für den Fall, dass der Scheinwerfer lediglich eine 180°-Drehung und einen Tilt Flip vollführt hat, muss die Differenz der Pan-Werte auf eine 180°-Drehung abgebildet werden.

Aus den beiden Begrenzungen des beleuchteten Bereichs 5 und der nun bekannten Abbildungsvorschrift zwischen den Pan-Werten und den absoluten Winkelkoordinaten kann im nächsten Schritt der Öffnungswinkel γ des Lichtkegels 4 in der Pan-Ebene bestimmt werden. Der Öffnungswinkel γ entspricht dem Unterschied der den Pan-Werten p21 und p22 entsprechenden absoluten Winkelkoordinaten.

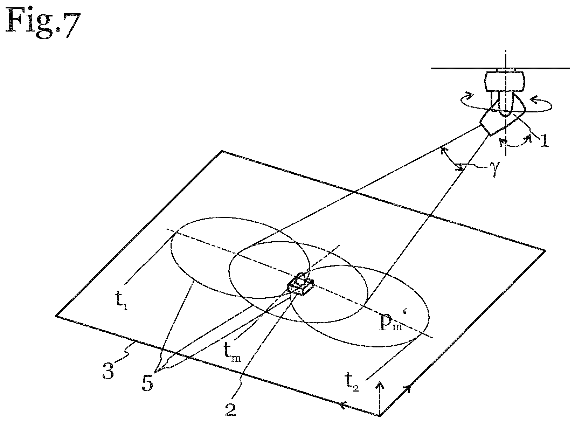

Im optional vorgesehenen Schritt gemäß Fig. 7 wird der Scheinwerfer zunächst in der Pan-Achse auf den Mittelpunkt pm' zentriert. Danach werden bei festem Pan-Wert durch Vor- und Zurückschwenken des Scheinwerfers in der Tilt-Achse die Begrenzungen des beleuchteten Bereichs t1 und t2 neu bestimmt. Aus der Differenz von t1 und t2 kann durch Vergleich mit dem bekannten Öffnungswinkel γ des Lichtkegels 4 die Abbildungsvorschrift der Tilt-Werte auf die absoluten Winkelkoordinaten in der Tilt-Ebene berechnet werden.

Dabei wird vorausgesetzt, dass der Öffnungswinkel γ des Lichtkegels 4 in der Pan- und Tilt-Ebene identisch ist. Im Fall eines nicht-symmetrischen Lichtkegels kann dies bei der Berechnung berücksichtigt werden.

Gemäß eines weiteren Ausführungsbeispiels der Erfindung wird die Vermessung des beleuchteten Bereichs 5 und Bestimmung des Mittelpunkts pm für mehrere, vorzugsweise drei unterschiedliche, aber bekannte Positionen in Absolutkoordinaten x, y, z des Lichtsensors 2 durchgeführt. Dies führt zu vorzugsweise drei Pan-/Tilt-Wert Tupel pt1, pt2 und pt3.

Aus den Tilt-Werten und Pan-Werten der drei Lichtsensoren kann zusammen mit den bekannten jeweiligen Positionen x, y, z der Lichtsensoren die Position des Scheinwerfers 1 im absoluten Raum durch bekannte Verfahren bestimmt werden.

Ebenso kann aus diesen Werten die Ausrichtung des Scheinwerfers 1, also die Richtung des vom Scheinwerfer ausgestrahlten Lichtkegels, bestimmt werden. Zu diesem Zweck kann ein mehrdimensionales lineares Gleichungssystems aufgestellt werden, welches durch einen an sich bekannten mathematischen Algorithmus, beispielsweise einen 3D-Solver, gelöst werden kann.

## Patentansprüche

1. Verfahren zur Kalibrierung eines, um eine Pan-Achse (7) durch Eingabe von Pan-Werten drehbaren und um eine Tilt-Achse (8) durch Eingabe von Tilt-Werten schwenkbaren, über einem Untergrund (3) angeordneten bühnentechnischen Geräts, wobei
a. ein Element auf dem Untergrund (3) angeordnet wird, welches geeignet ist, mit dem bühnentechnischen Gerät in einem bestimmten Bereich der Pan- und Tilt-Werte zusammenzuwirken,
b. das bühnentechnische Gerät durch Eingabe von Tilt- und Pan-Werten gedreht und geschwenkt wird, bis ein Pan- und Tilt-Wert erreicht wird, bei dem das Element mit dem bühnentechnischen Gerät zusammenwirkt,
c. wobei entweder
i. das bühnentechnische Gerät als Scheinwerfer (1) ausgeführt ist und auf einem Untergrund (3) einen beleuchteten Bereich (5) erzeugt, und das zusammenwirkende Element als Lichtsensor (2) ausgeführt ist, der die Ränder des beleuchteten Bereichs (5) detektiert, oder
ii. das bühnentechnische Gerät als Kamera ausgeführt ist, die einen Beobachtungsbereich auf einem Untergrund (3) aufzeichnet, und das zusammenwirkende Element als Lichtquelle, optische Markierung oder dergleichen ausgeführt ist, sodass der Beobachtungsbereich durch Detektion des Elements erkannt wird,
**dadurch gekennzeichnet, dass**
d. durch wiederholte Drehung und/oder Schwenkung des bühnentechnischen Geräts und Detektion der Zusammenwirkung des bühnentechnischen Geräts mit dem Element eine Abbildungsvorschrift der Pan- Werte und/oder der Tilt-Werte auf die Winkelkoordinaten des bühnentechnischen Geräts bestimmt wird.

2. Verfahren nach Anspruch 1, **dadurch gekennzeichnet, dass** das bühnentechnische Gerät als Scheinwerfer (1) ausgeführt ist und auf einem Untergrund (3) einen beleuchteten Bereich (5) erzeugt, und das zusammenwirkende Element als Lichtsensor (2) ausgeführt ist, wobei
a. der Lichtsensor (2) auf dem Untergrund (3) platziert wird,
b. der beleuchtete Bereich (5) durch Drehung und Schwenkung des Scheinwerfers (1) über den Untergrund (3) bewegt wird,
c. der Lichtsensor (2) die Ränder des beleuchteten Bereichs (5) detektiert,
d. durch Drehung und/oder Schwenkung des Scheinwerfers (1) und wiederholtes Detektieren des beleuchteten Bereichs (5) eine Abbildungsvorschrift der Pan- Werte und/oder der Tilt-Werte des Scheinwerfers (1) auf die Winkelkoordinaten des Scheinwerfers (1) bestimmt wird.

3. Verfahren nach Anspruch 2, **dadurch gekennzeichnet, dass** der beleuchtete Bereich (5) durch Drehung und Schwenkung des Scheinwerfers (1) so lange über den Untergrund (3) bewegt wird, bis der Lichtsensors (2) einen Rand des beleuchteten Bereichs (5) detektiert, und in Folge die Abmessungen sowie ein Mittelpunkt des beleuchteten Bereichs (5) durch Variieren des Pan-Wertes und/oder des Tilt-Wertes des Scheinwerfers (1) bestimmt werden.

4. Verfahren nach Anspruch 2 oder 3, **dadurch gekennzeichnet, dass** zur Bestimmung der Abbildungsvorschrift nach der Detektion des beleuchteten Bereichs (5) eine vollständige 360°-Drehung des Scheinwerfers (1) um die Pan-Achse (7) durchgeführt wird.

5. Verfahren nach Anspruch 2 oder 3, **dadurch gekennzeichnet, dass** zur Bestimmung der Abbildungsvorschrift nach der Detektion des beleuchteten Bereichs (5) eine 180°-Drehung des Scheinwerfers (1) um die Pan-Achse (7) sowie eine Schwenkung des Scheinwerfers (1) derart durchgeführt wird, dass der Tilt-Wert des Scheinwerfers (1) relativ zur Pan-Achse (7) gespiegelt wird.

6. Verfahren nach einem der Ansprüche 2 bis 5, **dadurch gekennzeichnet, dass** die Abmessungen des beleuchteten Bereichs (5) detektiert werden und aus der berechneten Abbildungsvorschrift der Öffnungswinkel des Lichtkegels (4) bestimmt wird.

7. Verfahren nach einem der Ansprüche 2 bis 6, **dadurch gekennzeichnet, dass** zunächst durch Abmessung des beleuchteten Bereichs (5) entlang der durch die Pan-Werte aufgespannten Ebene eine Abbildungsvorschrift der Pan-Werte auf absolute Winkelkoordinaten und der Öffnungswinkel des Lichtkegels (4) entlang dieser Ebene bestimmt wird, und in Folge durch Abmessung des beleuchteten Bereichs (5) entlang der durch die Tilt-Werte aufgespannten Ebene eine Abbildungsvorschrift der Tilt-Werte auf absolute Winkelkoordinaten bestimmt wird.

8. Verfahren nach Anspruch 1, **dadurch gekennzeichnet, dass** das bühnentechnische Gerät als Kamera ausgeführt ist, die einen Beobachtungsbereich auf einem Untergrund (3) aufzeichnet, und das zusammenwirkende Element als Lichtquelle, optische Markierung oder dergleichen ausgeführt ist, wobei
a. das Element auf dem Untergrund (3) platziert wird,
b. der Beobachtungsbereich durch Drehung und Schwenkung der Kamera über den Untergrund (3) bewegt wird,
c. der Beobachtungsbereich durch Detektion des Elements erkannt wird,
d. durch Drehung und/oder Schwenkung der Kamera und wiederholtes Detektieren des Beobachtungsbereichs eine Abbildungsvorschrift der Pan- Werte und/oder der Tilt-Werte der Kamera auf die Winkelkoordinaten der Kamera bestimmt wird.

9. Verfahren nach Anspruch 8, **dadurch gekennzeichnet, dass** der Beobachtungsbereich durch Drehung und Schwenkung der Kamera so lange über den Untergrund (3) bewegt wird, bis durch Detektion des Elements der Beobachtungsbereich detektiert wird, und in Folge die Abmessungen sowie ein Mittelpunkt des Beobachtungsbereichs durch Variieren des Pan-Wertes und/oder des Tilt-Wertes der Kamera bestimmt werden.

10. Verfahren nach Anspruch 8 oder 9, **dadurch gekennzeichnet, dass** zur Bestimmung der Abbildungsvorschrift nach der Detektion des Beobachtungsbereichs eine vollständige 360°-Drehung der Kamera um die Pan-Achse (7) durchgeführt wird.

11. Verfahren nach Anspruch 8 oder 9, **dadurch gekennzeichnet, dass** zur Bestimmung der Abbildungsvorschrift nach der Detektion des Beobachtungsbereichs eine 180°-Drehung der Kamera um die Pan-Achse (7) sowie eine Schwenkung der Kamera derart durchgeführt wird, dass der Tilt-Wert der Kamera relativ zur Pan-Achse (7) gespiegelt wird.

12. Verfahren nach einem der Ansprüche 8 bis 11, **dadurch gekennzeichnet, dass** die Abmessungen des Beobachtungsbereichs detektiert werden und aus der berechneten Abbildungsvorschrift der Öffnungswinkel des von der Kamera beobachteten Bereichs bestimmt wird.

13. Verfahren nach einem der Ansprüche 8 bis 12, **dadurch gekennzeichnet, dass** zunächst durch Abmessung des Beobachtungsbereichs entlang der durch die Pan-Werte aufgespannten Ebene eine Abbildungsvorschrift der Pan-Werte auf absolute Winkelkoordinaten und der Öffnungswinkel des von der Kamera beobachteten Bereichs entlang dieser Ebene bestimmt wird, und in Folge durch Abmessung des Beobachtungsbereichs entlang der durch die Tilt-Werte aufgespannten Ebene eine Abbildungsvorschrift der Tilt-Werte auf absolute Winkelkoordinaten bestimmt wird.

14. Verfahren nach einem der Ansprüche 1 bis 13, **dadurch gekennzeichnet, dass** das Verfahren für mehrere, vorzugsweise drei, bekannte Positionen des Elements durchgeführt wird.

15. Verfahren nach Anspruch 14, **dadurch gekennzeichnet, dass** aus den detektierten Pan- und Tilt-Werten für vorzugsweise drei bekannte Positionen des Elements die absolute Position des bühnentechnischen Geräts im dreidimensionalen Raum bestimmt wird.

16. Verfahren nach Anspruch 14 oder 15, **dadurch gekennzeichnet, dass** aus den detektierten Pan- und Tilt-Werten für vorzugsweise drei bekannte Positionen des Elements die die Ausrichtung des bühnentechnischen Geräts bestimmt wird.

17. Computerlesbares Speichermedium, umfassend ein Computerprogramm zur Steuerung des Ablaufs eines Verfahrens nach einem der Ansprüche 1 bis 16.

## Claims

1. A method for calibrating a technical stage device which is rotatable about a pan axis (7) by entering pan values and pivotable about a tilt axis (8) by entering tilt values and which is arranged above a ground (3), wherein
a. an element is arranged on the ground (3), said element being adapted to interact with the technical stage device in a certain range of the pan and tilt values,
b. the technical stage device is rotated and pivoted by entering tilt and pan values until a pan and tilt value is reached at which the element interacts with the technical stage device,
c. wherein
i. the technical stage device is either configured as a spotlight (1) and creates an illuminated area (5) on a ground (3), and the interacting element is configured as a light sensor (2) which detects the edges of the illuminated area (5), or
ii. the technical stage device is configured as a camera which captures an observation area on a ground (3) and the interacting element is configured as a light source, optical marker or the like so that the observation area is detected by detecting the element,
**characterized in that**
d. a mapping assignment of the pan values and/or tilt values to the angular coordinates of the technical stage device is determined by repeatedly rotating and/or pivoting the technical stage device and detecting the interaction of the technical stage device with the element.

2. The method according to claim 1, **characterized in that** the technical stage device is configured as a spotlight (1) and creates an illuminated area (5) on a ground (3), and **in that** the interacting element is configured as a light sensor (2), wherein
a. the light sensor (2) is arranged on the ground (3),
b. the illuminated area (5) is moved across the ground (3) by rotating and pivoting the spotlight (1),
c. the light sensor (2) detects the edges of the illuminated area (5),
d. a mapping assignment of the pan values and/or tilt values of the spotlight (1) to the angular coordinates of the spotlight (1) is determined by rotating and/or pivoting the spotlight (1) and by repeatedly detecting the illuminated area (5).

3. The method according to claim 2, **characterized in that** the illuminated area (5) is moved across the ground (3) by rotating and pivoting the spotlight (1) until the light sensor (2) detects an edge of the illuminated area (5) and **in that**, subsequently, the dimensions as well as a centre of the illuminated area (5) are determined by varying the pan value and/or the tilt value of the spotlight (1).

4. The method according to claim 2 or 3, **characterized in that** a complete rotation by 360° of the spotlight (1) about the pan axis (7) is performed after the detection of the illuminated area (5) for determining the mapping assignment.

5. The method according to claim 2 or 3, **characterized in that** for determining the mapping assignment a rotation by 180° of the spotlight (1) about the pan axis (7) as well as a pivoting movement of the spotlight (1) are performed after the detection of the illuminated area (5) in such a way that the tilt value of the spotlight (1) is mirrored relative to the pan axis (7).

6. The method according to one of claims 2 to 5, **characterized in that** the dimensions of the illuminated area (5) are detected and **in that** the opening angle of the cone of light (4) is determined from the calculated mapping assignment.

7. The method according to one of claims 2 to 6, **characterized in that** first, by measuring the illuminated area (5) along the plane defined by the pan values, a mapping assignment of the pan values to absolute angle coordinates is determined as well as the opening angle of the cone of light (4) along this plane and **in that**, subsequently, a mapping assignment of the tilt values to absolute angle coordinates is determined by measuring the illuminated area (5) along the plane defined by the tilt values.

8. The method according to claim 1, **characterized in that** the technical stage device is configured as a camera which captures an observation area on a ground (3) and **in that** the interacting element is configured as a light source, optical marker or the like, wherein
a. the element is placed on the ground (3),
b. the observation area is moved across the ground (3) by rotating and pivoting the camera,
c. the observation area is detected by detecting the element,
d. a mapping assignment of the pan values and/or tilt values of the camera to the angular coordinates of the camera is determined by rotating and/or pivoting the camera and by repeatedly detecting the observation area.

9. The method according to claim 8, **characterized in that** the observation area is moved across the ground (3) by rotating and pivoting the camera until the observation area is detected by detecting the element, and **in that**, subsequently, the dimensions as well as a centre of the observation area are determined by varying the pan value and/or the tilt value of the camera.

10. The method according to claim 8 or 9, **characterized in that** a complete rotation by 360° of the camera about the pan axis (7) is performed after the detection of the observation area for determining the mapping assignment.

11. The method according to claim 8 or 9, **characterized in that** for determining the mapping assignment a rotation by 180° of the camera about the pan axis (7) as well as a pivoting movement of the camera are performed after the detection of the observation area in such a way that the tilt value of the camera is mirrored relative to the pan axis (7).

12. The method according to one of claims 8 to 11, **characterized in that** the dimensions of the observation area are detected and **in that** the opening angle of the area observed by the camera is determined from the calculated mapping assignment.

13. The method according to one of claims 8 to 12, **characterized in that** first, by measuring the observation area along the plane defined by the pan values, a mapping assignment of the pan values to absolute angle coordinates is determined as well as the opening angle of the area observed by the camera along this plane and **in that**, subsequently, a mapping assignment of the tilt values to absolute angle coordinates is determined by measuring the observation area along the plane defined by the tilt values.

14. The method according to one of claims 1 to 13, **characterized in that** the method is performed for multiple, preferably three, known positions of the element.

15. The method according to claim 14, **characterized in that** the absolute position of the technical stage device in the three-dimensional space is determined from the detected pan and tilt values for preferably three known positions of the element.

16. The method according to claim 14 or 15, **characterized in that** the orientation of the technical stage device is determined from the detected pan and tilt values for preferably three known positions of the element.

17. A computer-readable storage medium, comprising a computer programme for controlling the course of a method according to one of claims 1 to 16.

## Revendications

1. Procédé de calibrage d'un équipement de technique scénique disposé au-dessus d'un sous-sol (3), pouvant tourner autour d'un axe panoramique (7) en entrant des valeurs panoramiques et pouvant pivoter autour d'un axe d'inclinaison (8) en entrant des valeurs d'inclinaison, dans lequel
a. un élément qui est adapté pour coopérer avec l'équipement de technique scénique dans une certaine plage de valeurs panoramiques et d'inclinaison est placé sur le sous-sol (3),
b. l'équipement de technique scénique est tourné et pivoté en entrant les valeurs panoramiques et d'inclinaison jusqu'à ce qu'une valeur panoramique et d'inclinaison soit atteinte, auxquelles l'élément coopère avec l'équipement de technique scénique,
c. dans lequel soit
i. l'équipement de technique scénique est conçu comme un projecteur (1) et génère une zone éclairée (5) sur un sous-sol (3), et l'élément coopérant est conçu comme un capteur de lumière (2) qui détecte les bords de la zone éclairée (5), ou
ii. l'équipement de technique scénique est conçu comme une caméra qui enregistre une zone d'observation sur un sous-sol (3), et l'élément coopérant est conçu comme une source de lumière, une marque optique ou un élément similaire, de sorte que la zone d'observation est reconnue par la détection de l'élément,
**caractérisé en ce que**
d. une spécification de représentation des valeurs panoramiques et/ou d'inclinaison sur les coordonnées angulaires de l'équipement de technique scénique est déterminée par rotation et/ou pivotement répété de l'équipement de technique scénique et la détection de la coopération de l'équipement de technique scénique avec l'élément.

2. Procédé selon la revendication 1, **caractérisé en ce que** l'équipement de technique scénique est conçu comme un projecteur (1) et génère une zone éclairée (5) sur un sous-sol (3), et l'élément coopérant est conçu comme un capteur de lumière (2), dans lequel
a. le capteur de lumière (2) est placé sur le sous-sol (3),
b. la zone éclairée (5) est déplacée sur le sous-sol (3) par rotation et pivotement du projecteur (1),
c. le capteur de lumière (2) détecte les bords de la zone éclairée (5),
d. une spécification de représentation des valeurs panoramiques et/ou d'inclinaison du projecteur (1) sur les coordonnées angulaires du projecteur (1) est déterminée par rotation et/ou pivotement du projecteur (1) et par détection répétée de la zone éclairée (5).

3. Procédé selon la revendication 2, **caractérisé en ce que** la zone éclairée (5) est déplacée sur le sous-sol (3) par rotation et pivotement du projecteur (1) jusqu'à ce que le capteur de lumière (2) détecte un bord de la zone éclairée (5), et ensuite les dimensions et un point central de la zone éclairée (5) sont déterminés par variation de la valeur panoramique et/ou la valeur d'inclinaison du projecteur (1).

4. Procédé selon la revendication 2 ou 3, **caractérisé en ce qu'**une rotation complète de 360° du projecteur (1) autour de l'axe panoramique (7) est effectuée après la détection de la zone éclairée (5) pour déterminer la spécification de représentation.

5. Procédé selon la revendication 2 ou 3, **caractérisé en ce que**, pour déterminer la spécification de représentation, une rotation de 180° du projecteur (1) autour de l'axe panoramique (7) et un pivotement du projecteur (1) sont effectués après la détection de la zone éclairée (5) de telle sorte que la valeur d'inclinaison du projecteur (1) soit reflétée par rapport à l'axe panoramique (7).

6. Procédé selon l'une des revendications 2 à 5, **caractérisé en ce que** les dimensions de la zone éclairée (5) sont détectées et l'angle d'ouverture du cône lumineux (4) est déterminé à partir de la spécification de représentation calculée.

7. Procédé selon l'une des revendications 2 à 6, **caractérisé en ce que** d'abord, par mesure de la zone éclairée (5) le long du plan défini par les valeurs panoramiques, une spécification de représentation des valeurs panoramiques sur des coordonnées angulaires absolues et l'angle d'ouverture du cône lumineux (4) le long de ce plan sont déterminés, et **en ce que** ensuite, par mesure de la zone éclairée (5) le long du plan défini par les valeurs d'inclinaison, une spécification de représentation des valeurs d'inclinaison sur des coordonnées angulaires absolues est déterminée.

8. Procédé selon la revendication 1, **caractérisé en ce que** l'équipement de technique scénique est conçu comme une caméra qui enregistre une zone d'observation sur un sous-sol (3), et l'élément coopérant est conçu comme une source de lumière, un marquage optique ou similaire, dans lequel
a. l'élément est placé sur le sous-sol (3),
b. la zone d'observation est déplacée sur le sous-sol (3) par rotation et pivotement de la caméra,
c. la zone d'observation est reconnue par la détection de l'élément,
d. une spécification de représentation des valeurs panoramiques et/ou d'inclinaison de la caméra sur les coordonnées angulaires de la caméra est déterminée par rotation et/ou pivotement de la caméra et par détection répétée de la zone d'observation.

9. Procédé selon la revendication 8, **caractérisé en ce que** la zone d'observation est déplacée sur le sous-sol (3) par rotation et pivotement de la caméra jusqu'à ce que la zone d'observation soit détectée par la détection de l'élément, et ensuite les dimensions ainsi qu'un point central de la zone d'observation sont déterminés par variation de la valeur panoramique et/ou la valeur d'inclinaison de la caméra.

10. Procédé selon la revendication 8 ou 9, **caractérisé en ce qu'**une rotation complète de 360° de la caméra autour de l'axe panoramique (7) est effectuée après la détection de la zone d'observation pour déterminer la spécification de représentation.

11. Procédé selon la revendication 8 ou 9, **caractérisé en ce que**, pour déterminer la spécification de représentation, une rotation de 180° de la caméra autour de l'axe panoramique (7) et un pivotement de la caméra sont effectués après la détection de la zone d'observation de telle sorte que la valeur d'inclinaison de la caméra soit reflétée par rapport à l'axe panoramique (7).

12. Procédé selon l'une des revendications 8 à 11, **caractérisé en ce que** les dimensions de la zone d'observation sont détectées et l'angle d'ouverture de la zone observée par la caméra est déterminé à partir de la spécification de représentation calculée.

13. Procédé selon l'une des revendications 8 à 12, **caractérisé en ce que** d'abord, par mesure de la zone d'observation le long du plan défini par les valeurs panoramiques, une spécification de représentation des valeurs panoramiques sur des coordonnées angulaires absolues et l'angle d'ouverture de la zone observée par la caméra le long de ce plan sont déterminés, et **en ce que** ensuite, par mesure de la zone d'observation le long du plan défini par les valeurs d'inclinaison, une spécification de représentation des valeurs d'inclinaison sur des coordonnées angulaires absolues est déterminée.

14. Procédé selon l'une des revendications 1 à 13, **caractérisé en ce que** le procédé est effectué pour une pluralité de, de préférence trois, positions connues de l'élément.

15. Procédé selon la revendication 14, **caractérisé en ce que** la position absolue de l'équipement de technique scénique dans l'espace tridimensionnel est déterminée à partir des valeurs panoramiques et d'inclinaison détectées pour de préférence trois positions connues de l'élément.

16. Procédé selon la revendication 14 ou 15, **caractérisé en ce que** l'orientation de l'équipement de technique scénique est déterminée à partir des valeurs panoramiques et d'inclinaison détectées pour de préférence trois positions connues de l'élément.

17. Un support de mémoire lisible par ordinateur comprenant un programme d'ordinateur pour contrôler le déroulement d'un procédé selon l'une des revendications 1 à 16.
